# EUROPEAN PATENT SPECIFICATION

(11) **EP 1 732 281 B1**
(45) Date of publication and mention of the grant of the patent: **25.07.2007**
(21) Application number: 05105031.8
(22) Date of filing: 08.06.2005
(51) Int. Cl.: H04L 29/06

(54) **Virtual private network for real-time data**
Virtuelles Privatnetzwerk für Echtzeitdaten
Réseau privé virtuel pour des données temps réel

(43) Date of publication of application: 13.12.2006
(73) Proprietor: Research In Motion Limited, Waterloo, Ontario N2L 3W8 (CA)
(72) Inventor: Brown, Michael K., Kitchener, Ontario N2M 2Z2 (CA); Nagy, Thomas C., Waterloo, Ontario N2L 2N4 (CA); Robertson, Ian M., Waterloo, Ontario N2J 1H4 (CA)
(74) Representative: Rickard, David John

(56) References cited:
- EP-A- 1 328 086
- US-A1- 2003 149 869
- US-A1- 2004 255 121

## Description

The present application relates to virtual private networks for protecting real-time media data such as voice data, including data transmitted from and to mobile electronic devices.

There is a growing interest in packet based voice telephone, such as voice over Internet protocol (VoIP) telephone, as an alternative to traditional public switched telephone networks (PSTNs). Enterprises such as corporations and other organizations are adopting VoIP as an alternative to traditional telephone systems. In some environments, VoIP is applied to mobile phones. As a security measure, enterprises typically use a virtual private network (VPN) for communications between devices within the enterprise network and external devices, such that all data exchanged with an external device is encrypted. However, the algorithms traditionally applied to non-time sensitive data communications may cause degradation or excessive delays when applied to time-sensitive media data such as voice data, especially when such algorithms are applied by a resource-limited mobile phone device. Additionally, the use of resource intensive encryption/decryption algorithms for real-time media data on a mobile device can in some cases effectively cause other applications on the device to slow down.

US2003/0149869 discloses a method and a system using two physically separate paths, one carrying encrypted data and one carrying a keystream used to decrypt the data. Both paths carry exactly the same number of bits.

EP-A-1 328 086 discloses a system which provides two separate communication links between the devices for transmitting a data signal and an encryption key respectively. The two links exploit different methods of transmission and would be unsuitable for communication of voice data.

### GENERAL

Accordingly, a system and method for securing wireless media data such as voice data in a resource-limited environment is desired.

Embodiments are described in the present application for a method and system for establishing two secure VPN connections or tunnels through a communications link between a mobile device and a network. One of the VPN tunnels is used for the exchange of media data such as voice data and the other of the VPN tunnels is used to exchange key data that is used for encrypting and decrypting the media data.

In one aspect, the present application provides a method for protecting real-time data exchanged as packets between a mobile electronic device (10) and a VPN gateway (122) during a media session over a communications link (130) that includes a wireless network (132). The method includes: establishing a first VPN connection (136) between the mobile electronic device (10) and the VPN gateway (122) through the communications link (130), the first VPN connection (136) using key-based encryption to protect data exchanged therethrough; providing a seed through the first VPN connection (136) for a second VPN connection;establishing, while the first VPN connection (136) is established, the second VPN connection (138) between the mobile electronic device (10) and the VPN gateway (122) through the communications link (130), the second VPN connection (138) using key-based encryption to protect data exchanged therethrough; wherein the seed provided through the first VPN connection is used to establish keys for decrypting data exchanged through the second VPN connection; and exchanging real-time data packets between the mobile electronic device (10) and the VPN gateway (122) through the second VPN connection (138).

In another aspect, the present application provides a mobile electronic device for engaging in a media session in which real-time data packets are exchanged with a remote location. The mobile device includes a wireless communications subsystem (124,126) for exchanging data packets with the remote location (120) through a communications link (130) that includes a wireless network (132), and a processor for controlling the communications subsystem. The device also includes a VPN module (112) associated with the processor for establishing co-existing first and second VPN connections (136, 138) through the communications link (130) between the mobile electronic device (10) and the remote location and exchanging there-between real-time data through the second VPN connection (138) the VPN module (112) being configured for receiving a seed through the first VPN connection (136) for the second VPN connection.

In yet another aspect, the present application provides a VPN gateway (122) for exchanging real-time data packets with a remote device (10) over a communications link (130), the gateway (122) comprising means for establishing co-existing first and second VPN connections (136, 138) through the communications link (130) between the VPN gateway (122) and the remote device (10) location and exchanging there-between real-time data through the second VPN connection (138), wherein the gateway (122) is configured for generating a seed for the second VPN connection (136) and for sending the generated seed through the first VPN connection (136) to the remote location..

### BRIEF DESCRIPTION OF THE DRAWINGS

Embodiments will now be described, by way of example only, with reference to the attached Figures, wherein:

Figure 1 is a block diagram of a communications system incorporating example embodiments;

Figure 2 is a block diagram of a process for establishing secure communications for media data such as voice data in the communications system of Figure 1; and

Figure 3 is a block diagram showing an example of a mobile electronic device that can be used in the communications systems of Figure 1.

Like reference numerals are used throughout the Figures to denote similar elements and features.

### DESCRIPTION OF PREFERRED EMBODIMENTS

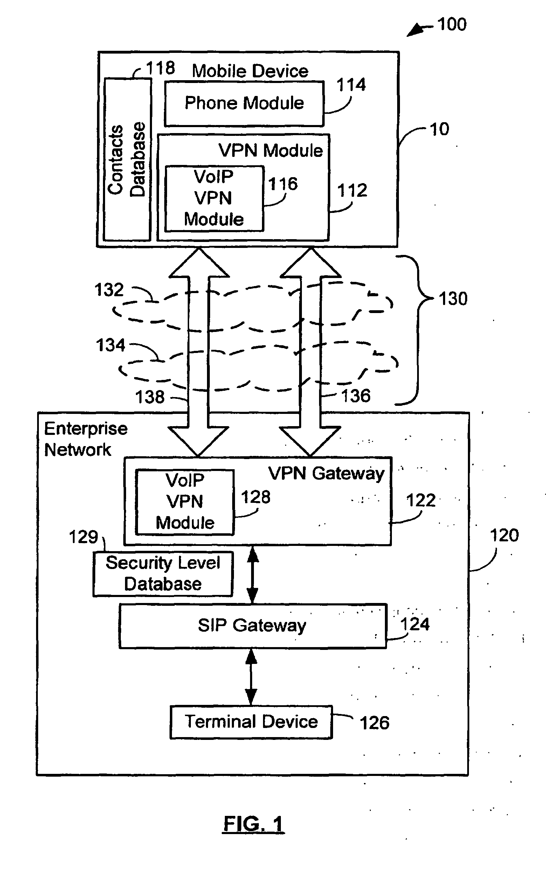

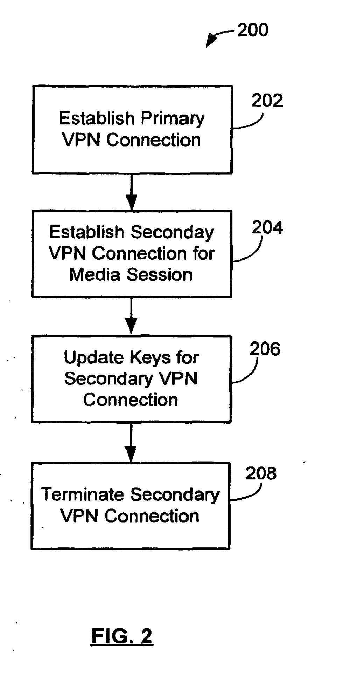

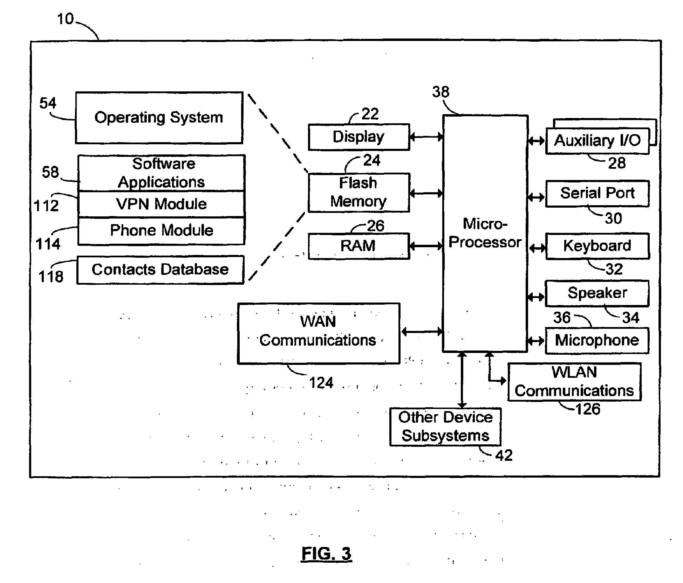

Referring first to Figure 1, there is a block diagram of a communication system 100 according to at least one example embodiment of the present invention. The communication system 100 includes a mobile electronic device 10 and an enterprise network 120 which exchange data through a communications link 130. The mobile electronic device 10 and enterprise network 120 are configured to exchange packets of real-time data such as voice data over the communications link 130 during Voice-over-IP (VoIP) calls in which media sessions are established between the mobile device 10 and a terminal device 126. During VoIP media sessions, data packets are exchanged over an IP-based network using real-time transport protocol (RTP) (or other real-time transport protocols) on top of the user datagram protocol (UDP) (or other suitable protocol). Session initiation protocol (SIP) or other suitable control protocols are employed to set-up, manage, control and/or tear down media paths between termination points.

In Figure 1, the terminal device 126 is shown as part of the enterprise network 120, however the terminal device 126 may be external to the network 120 and may be a further mobile device 10 connected to the network by communications link that is the same as or similar to communications link 130.

Communications link 130 provides a path for Vol P data between mobile device 10 and the enterprise network 120 and includes one or more wireless networks 132. In some example embodiments, the communications link also includes one or more wired network 134 portions, however in some embodiments the wireless network 132 is connected directly to the enterprise network 120. In example embodiments, wireless network 132 includes a wireless local area network (WLAN) which conforms to IEEE 802.11 standards, for example 802.11 b and/or 802.11g, or Bluetooth^{™}, however other communications protocols could also be used for the WLAN. In some example embodiments, instead of or in addition to a WLAN, wireless network 132 includes a wireless wide area network (WAN) that is a packet based cellular network. The wireless WAN can be or include any of a number of types of network including by way of non-limiting example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution) or UMTS (Universal Mobile Telecommunications Systems) or EvDO (Evolution Data Only).

The wired network 134 includes, in various example embodiments, the Internet, a further enterprise intranet or network, a direct connection, a public switched telephone network PSTN, and/or other wide area or local area networks across which data packets can travel.

In order to provide for secure communications, the enterprise network 120 includes a virtual private network (VPN) gateway 122 for establishing secure VPN connections or tunnels with external devices such as mobile electronic device 10. The VPN gateway 122 can be implemented on a computer such as a server running suitable VPN software. The enterprise network 120 also includes a session initiation protocol (SIP) gateway 124 for setting-up, managing, controlling and/or tearing down media paths between the mobile electronic device 10 and terminal device 126. The SIP gateway 124 can be implemented on a computer such as a server running suitable SIP software. In some embodiments, SIP gateway 124 is replaced with a gateway using a different control protocol.

Although only a single mobile electronic device 10 is shown in Figure 1, communications system 100 will typically include several of such devices. As suggested above, terminal device 126 can be a mobile electronic device 10. In one example embodiment, mobile electronic devices 10 are handheld two-way mobile communication devices 10 having VolP voice communication and data communication capabilities. In an example embodiment, the devices 10 have the capability to communicate with other computer systems on the internet. In various embodiments, mobile electronic devices 10 may include, by way of non limiting example, multiple-mode communication devices configured for both data and voice communication, mobile telephones, and PDAs enabled for wireless phone communications.

The mobile electronic device 10 includes a VPN module 112 for establishing secure encrypted communications through the communications link 130 with the VPN gateway 122 of enterprise network 120. As will be explained in greater detail below, in example embodiments of the invention, the VPN module 112 and VPN gateway 122 are configured to establish a first or primary secure VPN connection or tunnel 136 and a secondary secure VPN connection or tunnel 138 between the mobile electronic device 10 and the enterprise network 120 through communications link 130. The primary secure VPN connection 136 is used to exchange non-real-time data over communications link 130 and may be set up for long time periods as determined by the VPN gateway 122. The secondary secure VPN connection 138 is used to exchange real-time media data such as voice data over communications link 130, and will generally be set up for a much shorter duration than the primary secure VPN connection 138, for example, for the length of a VolP call or media session. A less resource intensive encryption algorithm and/or encryption technique is used for the secondary VPN connection 138 than the primary VPN connection 136, thereby allowing time sensitive data to be processed faster than if sent through the primary VPN connection 136. The primary VPN connection 136 is used to exchange shared secrets, for example seeds, used to establish the keys for encrypting and decrypting data that is sent through the secondary VPN connection 138.

An overview having been provided, a more detailed explanation will now be provided with reference to Figure 1 and the block diagram of Figure 2 which illustrates a process 200 for protecting real-time data packets according to example embodiments of the invention. As indicated in step 202, a first or primary secure VPN connection 136 is established through the communications link 130 between the VPN gateway 122 of network 120 and the mobile device 10. In an example embodiment, the primary secure VPN connection 136 uses a shared secret or keys previously stored on mobile device 10 and VPN gateway 122 for encrypting data sent over the communications link 130. While the communications link 130 is maintained, the primary VPN connection 136 will last for a duration set by the VPN gateway 122 or negotiated between the gateway 122 and the mobile device 10. The primary VPN connection 136 is in example embodiments a conventional VPN connection, and could for example employ triple DES (data encryption standard) or AES (advanced encryption standard). Data that is not particularly time sensitive is exchanged between the VPN gateway 122 and the mobile device 10 over the primary VPN connection 136 through the communications link 130. For example, e-mail messages, text messages, and file downloads and uploads can be exchanged over the primary VPN connection 136.

As indicated above, the mobile device 10 is enabled for packet based voice communications, and in this regard includes a phone module 114 for establishing VolP media sessions with a terminal device 126 via the communications link 130. SIP gateway 124 manages the setup and teardown of such media sessions. As indicated in step 204, when a media session between the mobile device and the terminal device 126 is set up, a secondary VPN connection 138 is established through the communications link 130 between VPN gateway 122 and mobile device 10 for media data such as voice data that is exchanged during the media session. In example embodiments, the VPN module 112 on device 10 and the VPN gateway 122 each include respective VoIP VPN sub-modules 116, 128 for negotiating and maintaining the secondary VPN connection 138 during the VoIP media session. Sub-modules 116, 128 are, in at least some example embodiments implemented by software instructions executed by micro-processors. In example embodiments, the encryption method used in the secondary VPN connection 138 for protecting the media data is simpler and less resource intensive that that used in the primary VPN connection 136. This reduces the possibility that time-sensitive voice data will be degraded through the encryption and decryption process at the resource limited mobile device 10. For example, in at least some embodiments, the encryption keys used for the secondary VPN connection 138 are smaller than those used for the primary VPN connection 136 such that secondary VPN connection 138 uses a lower-bit encryption than the primary VPN connection 136. Additionally, or alternatively, simpler encryption techniques may be used for the secondary VPN connection 138 than those used for the primary VPN connection 136. By way of non-limiting example, if a triple DES encryption (i.e. encrypt with one key, decrypt with a second key, than encrypt with a third key, then transmit) is used for the primary VPN connection, then single DES-type encryption may be used in the secondary VPN connection 138.

In example embodiments, to compensate for the use of simpler encryption keys and/or techniques in the secondary VPN connection 138, the keys used for the secondary VPN connection 138 are changed more frequently than those used for the primary VPN connection 136. The primary VPN connection 136 is used as a secure channel to exchange key information used by the device 10 and VPN gateway 122 to establish and update the encryption and decryption keys used for the secondary VPN connection 138. In one configuration, upon setup of the media session, the primary VPN connection 136 is used to exchange a shared secret such as a seed. The seed is then used at the VolP VPN modules 116, 128 to establish the key or keys used for data encryption/decryption for the secondary VPN connection 138. In some embodiments the seed is the encryption key.

As indicated in step 206, the keys used for the secondary VPN connection 138 are changed or updated throughout the media session. In order to update the keys, during the media session, updated seeds are periodically generated by the VolP VPN Module 128 of the VPN gateway 122 and transmitted through the primary VPN connection 136 to the mobile device 10. Each updated seed is used at the VolP VPN modules 116, 128 to establish new key or keys for data encryption/decryption for the secondary VPN connection 138 until a new updated seed is generated and transmitted. In one configuration, the VoIP VPN Module 128 is configured to generate an updated seed at regular periodic intervals throughout the media session. In some embodiments, the duration of the periodic intervals and/or the size of the seed are configurable values that can be set according to an enterprise's IT policy. In some embodiments, the party making a call is presented with the option, when making the call, of selecting a security level for a call. A higher security level for secondary VPN connection 138 would use shorter intervals between updated seeds and/or longer seeds than a lower security level.

In at least some example embodiments, the security level is automatically adapted by VoIP VPN module 128 based on characteristics of the media session. In one such configuration, the security level is determined based on the identification of either one or both of the mobile device 10 and the terminal device 126, with shorter seed change intervals and/or longer seeds and/or different algorithms being used for higher security levels than lower security levels. In one example, a security database 129 maintained at the enterprise network 120 for use by the VoIP VPN module 128 and/or SIP gateway 124 is used for categorizing media sessions into different security level classifications. In this regard, in one configuration the security database 129 categorizes calls based on device addresses (which can include phone numbers in at least one embodiment) such that at least some known device addresses are associated in the security database with predetermined security levels. When a media session is established, the VolP VPN module 128 references the security database to determine if either the initiating or destination device has an address (for example a telephone number) associated with a security level in the security database and if so uses the appropriate security level during the media session. Uncategorised device addresses are assigned a default security level.

I n some example embodiments, a contacts database 118 is maintained at the mobile device 10, and in addition to or in place of the categorized addresses in the security database 129 at the enterprise network 120, at least some of the addresses in the contacts database 118 are categorized with security levels. When a telephone call is made to one of the categorized addresses, the associated security level is referenced by the device VoIP VPN module 116 and applied to the secondary VPN connection 138 that is set up for the media session used for the call. In one configuration of such embodiment, the user of device 10 can configure the security level used for calls to phone numbers in the contacts database 118.

In some example embodiments, adaptive call profiles are maintained in the enterprise security database 129 and/or the contacts database 118 of individual mobile devices 10 for selected device addresses. For example, average and/or median call durations between device addresses that repeatedly call each other are tracked such that when a media session is established a security level for the secondary VPN connection 138 is selected based on the anticipated call duration. When the call profiles for a pair of device addresses indicates that calls or media sessions between the devices typically last a long time a higher security level (resulting in either a longer seed and/or more seed updates) is applied than if the call profile indicates a shorter typical call duration. Thus, calls between parties that typically call each other for long periods, for example 15 minutes, will have a higher security level applied in the secondary VPN connection 138 than calls between parties that typically last shorter periods, for example 5 minutes.

As indicated in step 208, the secondary VPN connection 138 is terminated when the media session that the connection was set up for is terminated. Thus, in example embodiments the secondary VPN connection 138 is set up with the media session it is intended to protect and then terminated at the end of such media session.

Although in respect of the embodiments described the key information for secondary VPN connection 138 is generated at the VPN gateway 122 and set to mobile electronic device 10, in some embodiments the key information can be generated at mobile electronic device 10 and then sent over the primary VPN connection 136 to the VPN gateway 122.

An example of a mobile electronic device 10 with which at least some embodiments of the invention may be used is shown in Figure 3. The device 10 includes wireless WAN communication subsystem 124 for two-way communications with a wireless WAN and a WLAN communication subsystem 126 for two way communications with a WLAN. Communications subsystems 124 and 126 include RF transceivers and may also include signal processors such as DSPs for example. The device 10 includes a microprocessor 38 that controls the overall operation of the device. The microprocessor 38 interacts with communications subsystems 124 and 126 and also interacts with further device subsystems such as the display 22, flash memory 24, random access memory (RAM) 26, auxiliary input/output (I/O) subsystems 28 (which may include a thumb-wheel, for example), serial port 30 (which may include a USB port, for example), keyboard or keypad 32, speaker 34, microphone 36, and any other device subsystems generally designated as 42.

Operating system software 54 and various software applications 58 used by the microprocessor 38 are, in one example embodiment, stored in a persistent store such as flash memory 24 or similar storage element. Software applications 58 may include a wide range of applications, including an address book application (which references contacts database 118), a messaging application, a calendar application, and/or a notepad application. Included among applications 58 is the software for implementing telephone module 114 for enabling the mobile device 10 to function as a mobile phone. Also included among applications 58 is the software for implementing the VPN module 112. Each software application 58 may include layout information defining the placement of particular fields in the user interface for the software application 58, such as text fields, input fields, etc. Those skilled in the art will appreciate that the operating system 54, specific device applications 58, or parts thereof, may be temporarily loaded into a volatile store such as RAM 26. Received communication signals may also be stored to RAM 26.

The microprocessor 38, in addition to its operating system functions, enables execution of software applications 58 on the device. A predetermined set of applications 58 which control basic device operations, including at least data and voice communication applications for example, will normally be installed on the device 10 during manufacture. Further applications may also be loaded onto the device 10 through the network 110, an auxiliary I/O subsystem 28, serial port 30, communications subsystem 124, 126 or any other suitable subsystem 42, and installed by a user in the RAM 26 or a non-volatile store for execution by the microprocessor 38.

The above-described embodiments of the present application are intended to be examples only. Alterations, modifications and variations may be effected to the particular embodiments by those skilled in the art without departing from the scope of the application, which is defined by the claims appended hereto.

## Claims

1. A method for protecting real-time data exchanged as packets between a mobile electronic device (10) and a VPN gateway (122) during a media session over a communications link (130) that comprises a wireless network (132), comprising:
establishing a first VPN connection (136) between the mobile electronic device (10) and the VPN gateway (122) through the communications link (130), the first VPN connection (136) using key-based encryption to protect data exchanged therethrough;
wherein the method further comprises:
providing a seed through the first VPN connection (136) for a second VPN connection;
establishing, while the first VPN connection (136) is established, the second VPN connection (138) between the mobile electronic device (10) and the VPN gateway (122) through the communications link (130), the second VPN connection (138) using key-based encryption to protect data exchanged therethrough, wherein the seed provided through the first VPN connection is used to establish keys for decrypting data exchanged through the second VPN connection;
exchanging real-time data packets between the mobile electronic device (10) and the VPN gateway (122) through the second VPN connection (138).

2. The method of claim 1 wherein the second VPN connection (138) uses a different strength encryption algorithm than the first VPN connection (136).

3. The method of claim 1 or claim 2 wherein a lower-bit encryption is used for the second VPN connection (138) than the first VPN connection.

4. The method of any one of claims 1 to 3 wherein updated seeds for the second VPN connection (138) are provided through the first VPN connection (136) at intervals while the second VPN connection (138) is established.

5. The method of claim 4 wherein the updated seeds are exchanged at regular intervals while the second VPN connection (138) is established.

6. The method of claim 4 wherein at least one of:
(i) the intervals at which the updated seeds are provided, and
(ii) a length of each of the seeds that are provided for the second VPN connection (138),
is based on an identification of at least one of the mobile electronic device (10) and a terminal device (126) with which the mobile electronic device (10) is exchanging the real-time data.

7. The method of claim 4 wherein a terminal device (126) exchanges the real-time data with the mobile electronic device (10) during a media session through the VPN gateway (122) and the second VPN connection 138, the method comprising tracking information for media sessions between the mobile electronic device (10) and the terminal device (126), wherein at least one of:
(i) the intervals at which the updated seeds are provided, and
(ii) a length of each of the seeds that are provided for the second VPN connection (138),
is based on the tracked information.

8. The method of claim 7 wherein the tracked information comprises information about durations of previous media sessions between the mobile electronic device (10) and the terminal device (126).

9. The method of any one of claims 1 to 8 wherein the real-time data is VoIP voice data, the method comprising setting up a VoIP media session between the mobile electronic device (10) and a terminal device (126) through the communications link (130) and VPN gateway (122), wherein the VolP voice data is exchanged between the VPN gateway (122) and the mobile device (10) using the second VPN connection (138), and wherein the second VPN connection (138) is established for the VoIP media session and then terminated upon completion of the VolP media session.

10. A mobile electronic device for engaging in a media session in which real-time data packets are exchanged with a remote location, the mobile device comprising:
a wireless communications subsystem (124,126) for exchanging data packets with the remote location (120) through a communications link (130) that comprises a wireless network (132);
a processor for controlling the communications subsystem; and wherein:
a VPN module (112) associated with the processor for establishing co-existing first and second VPN connections (136, 138) through the communications link (130) between the mobile electronic device (10) and the remote location and exchanging there-between real-time data through the second VPN connection (138), the VPN module (112) being configured for receiving a seed through the first VPN connection (136) for the second VPN connection.

11. The mobile electronic device of claim 10 wherein the VPN module (112) is configured for applying a less-resource intensive encryption to real-time data sent through the second VPN connection (138) than to data sent through the first VPN connection (136).

12. The mobile electronic device of claim 10 or claim 11 wherein the VPN module (112) is configured for generating a further seed for the second VPN connection (138) and for sending the further seed through the first VPN connection (136) to the remote location.

13. The mobile electronic device of claim 12 wherein the VPN module (112) is configured for generating and sending up-dated further seeds at intervals while the second VPN connection (138) is established.

14. The mobile electronic device of claim 13 wherein the VPN module (112) is configured such that at least one of:
(i) the intervals at which the updated further seeds are sent, and
(ii) a length each of the further seeds that are generated is based on an identification of at least one of the mobile electronic device (10) and a terminal device (126) with which the mobile electronic device (10) is exchanging the real-time data.

15. A VPN gateway (122) for exchanging real-time data packets with a remote device (10) over a communications link (130), the gateway (122) comprising means for establishing co-existing first and second VPN connections (136, 138) through the communications link (130) between the VPN gateway (122) and the remote device (10) location and exchanging there-between real-time data through the second VPN connection (138), wherein the gateway (122) is configured for generating a seed for the second VPN connection (138) and for sending the generated seed through the first VPN connection (136) to the remote location.

16. The VPN gateway (122) of claim 15 wherein the gateway (122) is configured for applying a less-resource intensive encryption to real-time data sent through the second VPN connection (138) than to data sent through the first VPN connection (136).

17. The VPN gateway (122) of claim 15 or 16 wherein the gateway is configured for generating and sending up-dated seeds for the second VPN connection (138) at intervals while the second VPN connection (138) is established.

18. The VPN gateway (122) of claim 17wherein the gateway is configured to determine the intervals for generating and sending the up-dated seeds based on an identity of at least the remote device or a further device that the real-time data packets are being exchanged with.

19. The VPN gateway (122) of claim 17 or claim 18 wherein the gateway is configured to determine a length for each of the seeds based on an identity of at least the remote device or a further device that the real-time data packets are being exchanged with.

20. A computer program product for protecting real-time data exchanged as packets between a mobile electronic device (10) and a VPN gateway (122) during a media session over a communications link (130) that comprises a wireless network (132), the computer program product comprising a computer readable medium embodying program code means executable by a processor of the mobile electronic device (10) and/or VPN (122) gateway for implementing the method of any one of claims 1 to 9.

21. A communications system comprising at least one mobile electronic device (10) according to any one of claims 10 to 14 and/or a VPN gateway (122) according to any one of claims 15 to 19.

## Patentansprüche

1. Verfahren zum Schutz von Echtzeitdaten, die während einer Mediensitzung über eine Übertragungsstrecke (130), welche ein drahtloses Netzwerk (132) umfasst, als Datenpakete zwischen einem mobilen elektronischen Gerät (10) und einer VPN-Gateway (122) ausgetauscht werden, umfassend:
Herstellen einer ersten VPN-Verbindung (136) zwischen dem mobilen elektronischen Gerät (10) und der VPN-Gateway (122) über die Übertragungsstrecke (130), wobei die erste VPN-Verbindung (136) eine schlüsselbasierte Verschlüsselung verwendet, um die darüber ausgetauschten Daten zu schützen;
wobei das Verfahren ferner umfasst:
Bereitstellen eines Seeds ("Startwert) für eine zweite VPN-Verbindung über die erste VPN-Verbindung (136);
während die erste VPN-Verbindung (136) hergestellt ist, Herstellen der zweiten VPN-Verbindung (138) zwischen dem mobilen elektronischen Gerät (10) und der VPN-Gateway (122) über die Übertragungsstrecke (130), wobei die zweite VPN-Verbindung (138) eine schlüsselbasierte Verschlüsselung verwendet, um die darüber ausgetauschten Daten zu schützen, wobei der über die erste VPN-Verbindung bereitgestellte Seed dazu verwendet wird, Schlüssel zum Entschlüsseln der über die zweite VPN-Verbindung ausgetauschten Daten einzurichten;
Austauschen von Echtzeitdatenpaketen zwischen dem mobilen elektronischen Gerät (10) und der VPN-Gateway (122) über die zweite VPN-Verbindung (138).

2. Verfahren gemäß Anspruch 1, bei dem die zweite VPN-Verbindung (138) einen Verschlüsselungsalgorithmus einer anderen Stärke verwendet als die erste VPN-Verbindung (136).

3. Verfahren gemäß Anspruch 1 oder 2, wobei für die zweite VPN-Verbindung (138) eine Verschlüsselung mit weniger Bits verwendet wird als für die erste VPN-Verbindung.

4. Verfahren gemäß einem der Ansprüche 1 bis 3, bei dem in Abständen aktualisierte Seeds für die zweite VPN-Verbindung (138) über die erste VPN-Verbindung (136) bereitgestellt werden, solange die zweite VPN-Verbindung (138) besteht.

5. Verfahren gemäß Anspruch 4, wobei die aktualisierten Seeds in regelmäßigen Abständen ausgetauscht werden, solange die zweite VPN-Verbindung (138) besteht.

6. Verfahren gemäß Anspruch 4, bei dem mindestens:
(i) die Abstände, in denen die aktualisierten Seeds bereitgestellt werden, und/oder
(ii) eine Länge jedes der für die zweite VPN-Verbindung (138) bereitgestellten Seeds
auf einer Identifikation von mindestens eines des mobilen elektronischen Geräts (10) und/oder einem Endgerät (126) basiert, mit dem das mobile elektronische Gerät (10) die Echtzeitdaten austauscht.

7. Verfahren gemäß Anspruch 4, bei dem ein Endgerät (126) die Echtzeitdaten mit dem mobilen elektronischen Gerät (10) während einer Mediensitzung über die VPN-Gateway (122) und die zweite VPN-Verbindung (138) austauscht, wobei das Verfahren umfasst, Informationen zu Mediensitzungen zwischen dem mobilen elektronischen Gerät (10) und dem Endgerät (126) zu protokollieren, wobei mindestens:
(i) die Abstände, in denen die aktualisierten Seeds bereitgestellt werden, und/oder
(ii) eine Länge jedes der für die zweite VPN-Verbindung (138) bereitgestellten Seeds
auf den protokollierten Informationen basieren.

8. Verfahren gemäß Anspruch 7, bei dem die protokollierten Informationen Angaben zur Dauer früherer Mediensitzungen zwischen dem mobilen elektronischen Gerät (10) und dem Endgerät (126) umfassen.

9. Verfahren gemäß einem der Ansprüche 1 bis 8, bei dem die Echtzeitdaten VoIP-Daten sind, wobei das Verfahren umfasst, eine VoIP-Mediensitzung zwischen dem mobilen elektronischen Gerät (10) und dem Endgerät (126) über die Übertragungsstrecke (130) und die VPN-Gateway (122) einzurichten, wobei die VoIP-Daten zwischen der VPN-Gateway (122) und dem mobilen elektronischen Gerät (10) über die zweite VPN-Verbindung (138) ausgetauscht werden und wobei die zweite VPN-Verbindung (138) für die VoIP-Mediensitzung hergestellt und nach Ende der VoIP-Mediensitzung wieder ausgelöst wird.

10. Mobiles elektronische Gerät zur Beteiligung an einer Mediensitzung, in der Echtzeitdatenpakete mit einem entfernten Standort ausgetauscht werden, wobei das mobile elektronische Gerät umfasst:
ein drahtloses Kommunikations-Subsystem (124, 126) zum Austauschen von Datenpaketen mit dem entfernten Standort (120) über eine Übertragungsstrecke (130), die ein drahtloses Netzwerk (132) umfasst;
einen Prozessor zum Steuern des Kommunikations-Subsystems; und wobei
ein VPN-Modul (112) dem Prozessor zugeordnet ist, um parallel zueinander eine erste und zweite VPN-Verbindung (136, 138) über die Übertragungsstrecke (130) zwischen dem mobilen elektronischen Gerät (10) und dem entfernten Standort herzustellen und zwischen diesen Echtzeitdaten über die zweite VPN-Verbindung (138) auszutauschen, wobei das VPN-Modul (112) dafür konfiguriert ist, über die erste VPN-Verbindung (136) einen Seed für die zweite VPN-Verbindung zu empfangen.

11. Mobiles elektronisches Gerät gemäß Anspruch 10, bei dem das VPN-Modul (112) dafür konfiguriert ist, auf die Echtzeitdaten, die über die zweite VPN-Verbindung (138) gesendet werden, eine weniger ressourcenintensive Verschlüsselung anzuwenden als auf Daten, die über die erste VPN-Verbindung (136) gesendet werden.

12. Mobiles elektronisches Gerät gemäß Anspruch 10 oder 11, bei dem das VPN-Modul (112) dafür konfiguriert ist, einen weiteren Seed für die zweite VPN-Verbindung (138) zu erzeugen und den weiteren Seed über die erste VPN-Verbindung (136) an den entfernten Standort zu senden.

13. Mobiles elektronisches Gerät gemäß Anspruch 12, bei dem das VPN-Modul (112) dafür konfiguriert ist, in Abständen aktualisierte weitere Seeds zu erzeugen und zu senden, solange die zweite VPN-Verbindung (138) besteht.

14. Mobiles elektronisches Gerät gemäß Anspruch 13, bei dem das VPN-Modul (112) so konfiguriert ist, dass mindestens:
(i) die Abstände, in denen die weiteren aktualisierten Seeds gesendet werden, und/oder
(ii) eine Länge jedes der weiteren erzeugten Seeds
auf einer Identifikation von mindestens eines des mobilen elektronischen Geräts (10) und einem Endgerät (126) basiert, mit dem das mobile elektronische Gerät (10) die Echtzeitdaten austauscht.

15. VPN-Gateway (122) zum Austauschen von Echtzeitdatenpaketen mit einem entfernten Gerät (10) über eine Übertragungsstrecke (130), wobei die VPN-Gateway (122) ein Mittel umfasst, um parallel eine erste und eine zweite VPN-Verbindung (136, 138) über die Übertragungsstrecke (130) zwischen der VPN-Gateway (122) und dem Standort des entfernten Geräts (10) herzustellen und zwischen diesen Echtzeitdaten über die zweite VPN-Verbindung (138) auszutauschen, wobei die VPN-Gateway (122) dafür konfiguriert ist, einen Seed für die zweite VPN-Verbindung (138) zu erzeugen und den erzeugten Seed über die erste VPN-Verbindung (136) an den entfernten Standort zu senden.

16. VPN-Gateway (122) gemäß Anspruch 15, wobei die Gateway (122) dafür konfiguriert ist, auf die Echtzeitdaten, die über die zweite VPN-Verbindung (138) gesendet werden, eine weniger ressourcenintensive Verschlüsselung anzuwenden als auf Daten, die über die erste VPN-Verbindung (136) gesendet werden.

17. VPN-Gateway (122) gemäß Anspruch 15 oder 16, wobei die Gateway dafür konfiguriert ist, in Abständen aktualisierte Seeds für die zweite VPN-Verbindung (138) zu erzeugen und zu senden, solange die zweite VPN-Verbindung (138) besteht.

18. VPN-Gateway (122) gemäß Anspruch 17, wobei die Gateway dafür konfiguriert ist, die Abstände zum Erzeugen und Senden der aktualisierten Seeds auf Basis einer Identität mindestens des entfernten Geräts oder eines weiteren Geräts, mit dem die Echtzeitdatenpakete ausgetauscht werden, zu bestimmen.

19. VPN-Gateway (122) gemäß Anspruch 17 oder 18, wobei die Gateway dafür konfiguriert ist, die Länge jedes der Seeds auf Basis einer Identität mindestens des entfernten Geräts oder eines weiteren Geräts, mit dem die Echtzeitdatenpakete ausgetauscht werden, zu bestimmen.

20. Computerprogrammprodukt zum Schützen der Echtzeitdaten, die während einer Mediensitzung über eine Übertragungsstrecke (130), welche ein drahtloses Netzwerk (132) umfasst, als Datenpakete zwischen einem mobilen elektronischen Gerät (10) und einer VPN-Gateway (122) ausgetauscht werden, wobei das Computerprogrammprodukt einen computerlesbaren Datenträger beinhaltet, auf dem ein Programmcodemittel enthalten ist, welches von einem Prozessor des mobilen elektronischen Geräts (10) und/oder der VPN-Gateway (122) ausgeführt werden kann, um das Verfahren gemäß einem der Ansprüche 1 bis 9 zu realisieren.

21. Kommunikationssystem, welches mindestens ein mobiles elektronisches Gerät (10) gemäß einem der Ansprüche 10 bis 14 und/oder eine VPN-Gateway (122) gemäß einem der Ansprüche 15 bis 19 umfasst.

## Revendications

1. Un procédé pour protéger des données en temps réel échangées en paquets entre un dispositif électronique mobile (10) et une passerelle VPN (122) durant une session de média sur une liaison de communication (130) qui comporte un réseau sans fil (132), comportant :
établir une première connexion VPN (136) entre le dispositif électronique mobile (10) et la passerelle VPN (122) par le biais de la liaison de communication (130), la première connexion VPN (136) utilisant un chiffrement à clé pour protéger des données échangées de cette façon ;
où le procédé comporte de plus :
fournir un germe par le biais de la première connexion VPN (136) pour une deuxième connexion VPN ;
établir, pendant que la première connexion VPN (136) est établie, la deuxième connexion VPN (138) entre le dispositif électronique mobile (10) et la passerelle VPN (122) par le biais de la liaison de communication (130), la deuxième connexion VPN (138) utilisant un chiffrement à clé pour protéger des données échangées de cette façon, où le germe fourni par le biais de la première connexion VPN est utilisé pour établir des clés pour déchiffrer des données échangées par le biais de la deuxième connexion VPN ;
échanger des paquets de données en temps réel entre le dispositif électronique mobile (10) et la passerelle VPN (122) par le biais de la deuxième connexion VPN (138).

2. Le procédé de la revendication 1 où la deuxième connexion VPN (138) utilise un algorithme de chiffrement de force différente de la première connexion VPN (136).

3. Le procédé de la revendication 1 ou de la revendication 2 où un chiffrement utilisé pour la deuxième connexion VPN (138) comporte moins de bits que pour la première connexion VPN.

4. Le procédé de n'importe laquelle des revendications 1 à 3 où des germes mis à jour pour la deuxième connexion VPN (138) sont fournis par le biais de la première connexion VPN (136) à intervalles pendant que la deuxième connexion VPN (138) est établie.

5. Le procédé de la revendication 4 où les germes mis à jour sont échangés à intervalles réguliers pendant que la deuxième connexion VPN (138) est établie.

6. Le procédé de la revendication 4 où au moins un élément parmi :
(i) les intervalles auxquels les germes mis à jour sont fournis, et
(ii) une longueur de chacun des germes qui sont fournis pour la deuxième connexion VPN (138),
est basé sur une identification d'au moins un dispositif parmi le dispositif électronique mobile (10) et un dispositif terminal (126) avec lequel le dispositif électronique mobile (10) échange les données en temps réel.

7. Le procédé de la revendication 4 où un dispositif terminal (126) échange les données en temps réel avec le dispositif électronique mobile (10) durant une session de média par le biais de la passerelle VPN (122) et de la deuxième connexion VPN 138, le procédé comportant le suivi d'informations pour des sessions de média entre le dispositif électronique mobile (10) et le dispositif terminal (126), où au moins un élément parmi :
(i) les intervalles auxquels les germes mis à jour sont fournis, et
(ii) une longueur de chacun des germes qui sont fournis pour la deuxième connexion VPN (138),
est basé sur les informations suivies.

8. Le procédé de la revendication 7 où les informations suivies comportent des informations sur les durées de sessions de média précédentes entre le dispositif électronique mobile (10) et le dispositif terminal (126).

9. Le procédé de n'importe laquelle des revendications 1 à 8 où les données en temps réel sont des données vocales VoIP, le procédé comportant la création d'une session de média VoIP entre le dispositif électronique mobile (10) et un dispositif terminal (126) par le biais de la liaison de communication (130) et de la passerelle VPN (122), où les données vocales VoIP sont échangées entre la passerelle VPN (122) et le dispositif mobile (10) à l'aide de la deuxième connexion VPN (138), et où la deuxième connexion VPN (138) est établie pour la session de média VoIP et ensuite terminée à l'achèvement de la session de média VoIP.

10. Un dispositif électronique mobile pour prendre part à une session de média dans laquelle des paquets de données en temps réel sont échangés avec un lieu distant, le dispositif mobile comportant:
un sous-système de communication sans fil (124, 126) pour échanger des paquets de données avec le lieu distant (120) par le biais d'une liaison de communication (130) qui comporte un réseau sans fil (132) ;
un processeur pour contrôler le sous-système de communication ; et où :
un module VPN (112) associé au processeur pour établir une première et une deuxième connexions VPN coexistantes (136, 138) par le biais de la liaison de communication (130) entre le dispositif électronique mobile (10) et le lieu distant et échanger entre ces derniers des données en temps réel par le biais de la deuxième connexion VPN (138), le module VPN (112) étant configuré pour recevoir un germe par le biais de la première connexion VPN (136) pour la deuxième connexion VPN.

11. Le dispositif électronique mobile de la revendication 10 où le module VPN (112) est configuré pour appliquer un chiffrement moins exigeant en termes de ressources à des données en temps réel envoyées par le biais de la deuxième connexion VPN (138) que pour des données envoyées par le biais de la première connexion VPN (136).

12. Le dispositif électronique mobile de la revendication 10 ou de la revendication 11 où le module VPN (112) est configuré pour générer un germe supplémentaire pour la deuxième connexion VPN (138) et pour envoyer le germe supplémentaire par le biais de la première connexion VPN (136) au lieu distant.

13. Le dispositif électronique mobile de la revendication 12 où le module VPN (112) est configuré pour générer et envoyer des germes mis à jour supplémentaires à intervalles pendant que la deuxième connexion VPN (138) est établie.

14. Le dispositif électronique mobile de la revendication 13 où le module VPN (112) est configuré de telle sorte qu'au moins un élément parmi :
(i) les intervalles auxquels les germes mis à jour supplémentaires sont envoyés, et
(ii) une longueur de chacun des germes supplémentaires qui sont générés
est basé sur une identification d'au moins un dispositif parmi le dispositif électronique mobile (10) et un dispositif terminal (126) avec lequel le dispositif électronique mobile (10) échange les données en temps réel.

15. Une passerelle VPN (122) pour échanger des paquets de données en temps réel avec un dispositif distant (10) sur une liaison de communication (130), la passerelle (122) comportant des moyens pour établir une première et une deuxième connexions VPN coexistantes (136, 138) par le biais de la liaison de communication (130) entre la passerelle VPN (122) et le lieu du dispositif distant (10) et échanger entre ces derniers des données en temps réel par le biais de la deuxième connexion VPN (138), où la passerelle (122) est configurée pour générer un germe pour la deuxième connexion VPN (138) et pour envoyer le germe généré par le biais de la première connexion VPN (136) au lieu distant.

16. La passerelle VPN (122) de la revendication 15 où la passerelle (122) est configurée pour appliquer un chiffrement moins exigeant en termes de ressources à des données en temps réel envoyées par le biais de la deuxième connexion VPN (138) que pour des données envoyées par le biais de la première connexion VPN (136).

17. La passerelle VPN (122) de la revendication 15 ou 16 où la passerelle est configurée pour générer et envoyer des germes mis à jour pour la deuxième connexion VPN (138) à intervalles pendant que la deuxième connexion VPN (138) est établie.

18. La passerelle VPN (122) de la revendication 17 où la passerelle est configurée pour déterminer les intervalles pour générer et envoyer les germes mis à jour sur la base d'une identité d'au moins un dispositif parmi le dispositif distant ou un dispositif supplémentaire avec lequel les paquets de données en temps réel sont échangés.

19. La passerelle VPN (122) de la revendication 17 ou de la revendication 18 où la passerelle est configurée pour déterminer une longueur pour chacun des germes sur la base d'une identité d'au moins un dispositif parmi le dispositif distant ou un dispositif supplémentaire avec lequel les paquets de données en temps réel sont échangés.

20. Un produit de programme informatique pour protéger des données en temps réel échangées en paquets entre un dispositif électronique mobile (10) et une passerelle VPN (122) durant une session de média sur une liaison de communication (130) qui comporte un réseau sans fil (132), le produit de programme informatique comportant un support lisible par ordinateur incorporant des moyens de code de programme exécutables par un processeur du dispositif électronique mobile (10) et/ou de la passerelle VPN (122) pour implémenter le procédé de n'importe laquelle des revendications 1 à 9.

21. Un système de communication comportant au moins un dispositif électronique mobile (10) selon n'importe laquelle des revendications 10 à 14 et/ou une passerelle VPN (122) selon n'importe laquelle des revendications 15 à 19.
